# EUROPEAN PATENT APPLICATION

(11) **EP 4 484 354 A1**
(43) Date of publication of application: **01.01.2025**
(21) Application number: 23181968.1
(22) Date of filing: 28.06.2023
(51) Int. Cl.: B66C 1/10, B66C 1/64, B66C 1/16

(54) **LIFTING DEVICE FOR TURNING A SHEAR WEB OF A WIND TURBINE BLADE**

(71) Applicant: LM Wind Power A/S, 6000 Kolding (DK)
(72) Inventor: NANGOI, Idryan Edmund, 6000 Kolding (DK)
(74) Representative: COPA Copenhagen Patents

(57) **Abstract**

A lifting device (50) designed for turning of a shear web in wind turbine blades. The device enables the shear web, comprising a web body positioned between two mounting flanges, to be turned from a horizontal to a vertical orientation around a longitudinal axis extending through the centre of gravity. The lifting device comprises an elongated body (52) with two attachment points, fixing devices (60, 60') to releasable engage the shear web near the mounting flanges. The lifting device further comprises first and second repositioning mechanisms (72, 72') that allow for flexible adjustment of the distances between the fixing devices and the respective attachment points along the elongated body. This feature facilitates the positioning of the shear web's centre of gravity between the attachment points, ensuring efficient lifting and handling during wind turbine blade assembly.

## Description

### TECHNICAL FIELD

The present disclosure relates to a lifting device and a method of using a lifting device for turning a shear web upright.

### BACKGROUND

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers of woven fabric or fibre and resin. Wind turbine blades of fibre-reinforced polymer are usually manufactured in moulds, where the pressure side and the suction side of the blade are manufactured separately by arranging glass fibre mats and/or other fibre-reinforcement material, such as carbon fibre, in each of the two mould parts. The two shell halves are usually glued together, wherein an adhesive is applied to the inner face of the lower blade half before the upper blade half is lowered thereon. Modern wind turbine blades are typically relatively thick at the root end and thin out towards to the tip. The same applies to the shear webs. Furthermore, modern wind turbine blades often extend along a curved course to position the tip of the unloaded blade further away from the tower than the root of the blade. Such a blade is commonly known as a pre-bent blade. Consequently, the shear webs also extend from a relatively thick root portion to a relatively thin tip portion along a curved course.

Spar caps or main laminates are placed or integrated in the shell halves and may be combined with shear webs or spar beams to form structural support members. Spar caps or main laminates may be joined to, or integrated within, the inside of the suction and pressure halves of the shell. The shear webs are typically pre-moulded in a separate mould before being lifted therefrom, turned upright, and moved above the blade mould. Thus, the shear webs are typically bonded to the inside surface of the lower blade half prior to adhering the upper blade half, usually by means of upper and lower mounting flanges forming opposing edges of the shear web, arranged perpendicular to the web body. An adhesive such as epoxy is applied along these mounting flanges for bonding the shear webs to the respective inner surface of the shell half.

However, this manufacturing approach presents significant challenges, particularly in lifting and turning the shear web. The shear web, which is relatively flexible along its chordwise direction, requires specialized lifting equipment to handle it. Without proper support along a significant portion of its length, the shear web tends to bend when lifted from lying flat on its mould. Subsequently, the shear web needs to be placed on specialized turning equipment, often necessitating the removal of the lifting equipment. Turning the shear web upright often leads to distortion and twisting, posing a safety hazard to nearby operators and risking damage to the web. Once the shear web is successfully turned, an assembly fixture is attached to transfer it to the blade mould.

Furthermore, if a wind turbine blade has multiple shear webs with different shapes, specialized equipment is necessary for each shear web, as each may require a clockwise or counterclockwise turning operation. This increases the complexity and cost of blade manufacturing, as well as the cycle time. Moreover, the operators may be exposed to hazardous or uncomfortable postures, which can lead to safety concerns.

### SUMMARY

On this background, it may be seen as an object of the present disclosure to provide a lifting device for releasably engaging a shear web for a wind turbine blade to allow turning the shear web from a substantially horizontal position to a substantially vertical position about the centre of gravity of the shear web.

Another object of the present disclosure is to provide a method of turning a shear web from a substantially horizontal position to a substantially vertical position about the centre of gravity of the shear web.

One or more of these objects may be met by aspects of the present disclosure as described in the following.

A first aspect of this disclosure relates to a lifting device for releasably engaging a shear web for a wind turbine blade to allow turning the shear web from a substantially horizontal position to a substantially vertical position about a longitudinal axis of the shear web extending substantially through the centre of gravity of the shear web, the shear web having a first mounting flange, an opposing second mounting flange, and a web body arranged between the first mounting flange and the second mounting flange, the lifting device comprising:
- a first attachment point for securing a line thereto;
- preferably a second attachment point for securing a line thereto;
- an elongated body extending from the first attachment point and preferably to the second attachment point;
- a first fixing device configured to releasably engage the shear web at or adjacent to the first mounting flange; and
- a second fixing device configured to releasably engage the shear web at or adjacent to the second mounting flange;
wherein the first and second fixing devices are secured to the elongated body and the lifting device comprises a first repositioning means for allowing adjustment of a distance between the first fixing device and the first attachment point along the elongated body, and comprises a second repositioning means for allowing adjustment of a distance between the second fixing device and the first attachment point along the elongated body so that the longitudinal axis of the shear web, when held by the lifting device, can be arranged at a specific or predefined distance from the first attachment point along the elongated body. The specific distance may preferably correspond to a position being between the first and second attachment points, for example a midpoint substantially between the first and second attachment points. Additionally or alternatively, the second repositioning means may allow for adjustment of a distance between the second fixing device and the second attachment point along the elongated body.

The inventors have found that such a lifting device may offer a significant advantage in allowing the turning of a shear web from a horizontal to a vertical position for wind turbine blades. By incorporating an elongated body with adjustable attachment points and fixing devices, the lifting device may enable precise engagement with the shear web at or adjacent to the mounting flanges. Additionally, the lifting device features repositioning means that can allow for fine-tuning the distance between the fixing devices and the attachment points along the elongated body. This adjustability advantageously facilitates the positioning of the shear web's centre of gravity between the first and second attachment points, ensuring stability and balanced lifting during the turning process. The ability to effectively control and maintain the shear web's position enhances the efficiency and safety of the blade manufacturing process.

The shear web may extend substantially along a longitudinal axis from a root end to a tip end. In the context of this disclosure, the longitudinal axis coincides with the centre of gravity of the shear web. The shear web may extend along a curved course. For example, the midline between the first side and the second side may deviate from the longitudinal axis. This is especially the case, when the wind turbine blade is a pre-bent wind turbine blade which is increasingly common.

Moreover, the shear web may extend along a height axis between the first mounting flange and the second mounting flange. The web body may comprise a first lateral side and a second lateral side both extending from the root end to the tip end of the shear web. The first mounting flange may be adapted to be oriented towards either the suction or pressure side of the wind turbine blade and the second mounting flange may be adapted to be oriented towards the opposite side.

Additionally or alternatively, the first fixing device may comprise a first clamp preferably being configured for releasably engaging the shear web at the first mounting flange. The second fixing device may comprise a second clamp preferably being configured for releasably engaging the shear web at the second mounting flange.

Clamps have been found to be an advantageous implementation of the fixing devices for engaging the shear web at the mounting flanges. By incorporating first and second clamps, the lifting device ensures a secure and reliable connection between the fixing devices and the shear web at the respective mounting flanges. The clamps are specifically designed for releasably engaging the shear web, allowing for easy attachment and detachment during the lifting and turning process. This design feature enhances the efficiency and flexibility of the lifting device, facilitating swift and controlled movements when transitioning the shear web from a horizontal to a vertical position. The use of clamps as fixing devices enhances the overall reliability and safety of the lifting device, providing a robust solution for the manufacturing and assembly of wind turbine blades.

Additionally or alternatively, the first clamp and/or the second clamp may comprise jaws configured to releasably engage the web body adjacent to the respective mounting flange. The jaws may be configured to define a space for accommodating the respective mounting flange when the shear web is held by the lifting device.

Such a lifting device provides several advantages, for example when compared to suction cups. Firstly, the jaws of the clamps may ensure a secure and precise fit around the mounting flanges of the shear web. The defined space may allow for a snug fit, minimizing any potential movement or slippage during the lifting and turning process. This secure engagement may contribute to the overall stability and control of the shear web, reducing the risk of damage or accidents during handling. Secondly, by releasably engaging the web body adjacent to the mounting flange, the lifting device may ensure a balanced and distributed force during the lifting and turning operation. The jaws may grip the web body firmly, thus preventing any undue stress or deformation that could compromise the integrity of the shear web during the turning process. This controlled grip and distribution of force may enhance the safety and reliability of the lifting device, minimizing the chances of structural damage to the shear web.

Additionally or alternatively, the first clamp and/or second clamp may comprise a pultrusion arranged to extend into the space and configured for engaging the respective mounting flange when the shear web is held by the lifting device. This may ensure that the mounting flange is arranged at a known location within the clamp(s) and may thus aid in positioning the shear web correctly on the lifting device. In addition, the pultrusion may be arranged to engage adjacent to the respective mounting flange opposite the connection to the web body. The clamp(s) may be arranged so that the space envelops the parts of the mounting flange extending transversely from the web body. This may ensure that undue stress is avoided on these relatively thin parts of the mounting flange to avoid possible damaging thereof.

Additionally or alternatively, the lifting device may be substantially beam-shaped. The elongated body may be a beam. Alternatively, the elongated body may be plate-shaped or comprise a framework and may comprise one or more additional first fixing devices and one or more additional second fixing devices in addition to the first and second fixing devices. The additional fixing devices may be provided in the same way as the first mentioned fixing devices.

Additionally or alternatively, the fixing devices may be configured so that when engaged the lifting device and the shear web can be handled as a single entity. This may improve efficiency, coordination, and safety in wind turbine blade manufacturing. Operators can easily manipulate both components together, reducing the risk of misalignments or disconnections. Thus, this streamlined handling approach may accelerate the manufacturing process and reduce overall cycle time.

Additionally or alternatively, the first fixing device may comprise a first suction cup that may be configured for releasably engaging adjacent to the first mounting flange of the shear web, and the second fixing device may comprise a second suction cup that may be configured for releasably engaging adjacent to the first mounting flange of the shear web.

Additionally or alternatively, the first and second repositioning means may comprise a first and a second sliding element, respectively, that may be configured for sliding along the elongated body towards and away from the first and second attachment points, respectively.

This may allow operators to easily adjust the distance between the fixing devices and attachment points along the elongated body so as to place the centre of gravity of the shear web at a consistent location when using multiple lifting devices. This also allows for precise customization, simplifies setup procedures, and enhances versatility to accommodate different shear web configurations.

Alternatively, the first and second repositioning means may each comprise a telescopic adjustment mechanism, a threaded member, a hinged element. The repositioning means can be designed with a telescopic mechanism. This allows for an adjustable length of the elongated body and therefore the distance between the attachment points. This mechanism enables smooth extension or contraction of the elongated body, providing flexibility in adapting to varying shear web dimensions or operational requirements. Operators can easily set the desired length by sliding the telescopic sections, ensuring precise positioning and efficient handling. Additionally or alternatively, the repositioning means can be implemented as a threaded member allowing for fine-grained adjustments along the elongated body. By incorporating a threaded rod or screw mechanism, operators can rotate the member to move the fixing devices closer or farther from the attachment points. This threaded adjustment feature provides increased control over the distance and enables precise positioning of the lifting device with ease. The pitch of the threaded member can be selected to allow for more coarse or fine adjustment. Implementing the repositioning means as a hinged element offers an alternative method for adjusting the distance between the fixing devices and attachment points. This hinge mechanism allows for fast adjustments, enabling operators to tilt or pivot the fixing devices relative to the elongated body to engage these with the shear web. This implementation offers benefits in being especially quick to adjust.

Additionally or alternatively, the first and second repositioning means may comprise first and second locking elements, respectively, such as a lock pin or a bolt, configured for selectively locking the position of the first and second sliding elements, respectively.

Such locking elements may allow for selective fixation of the first and second fixing devices, which may also include the sliding elements. This may ensure stable positioning during the lifting and turning process, minimizing the risk of misalignments or disturbances. The locking elements enhance usability by providing a convenient and efficient means of securing the sliding elements in place, enabling quick adjustments and reliable handling.

Additionally or alternatively, the first and second repositioning means may comprise a first set of one or more holes and preferably a second set of one or more holes, respectively, that may be distributed along the length of the elongated body. For example, the first set of one or more holes may be adjacent to the first attachment point, and the second set of one or more holes may preferably be adjacent to the second attachment point. The first locking element may be configured for selectively attaching the first fixing device along the elongated body using the first set of one or more holes. The second locking element may be configured for selectively attaching the second fixing device along the elongated body using the second set of one or more holes.

These sets may provide flexibility and precision in positioning the fixing devices, which may also include the sliding elements. Operators can select the appropriate holes or an appropriate location along a hole to ensure secure engagement with the shear web, allowing for customized alignment to ensure the centre of gravity is optimally located along the elongated body.

A second aspect of the present disclosure relates to a lifting assembly for releasably engaging a shear web for a wind turbine blade to allow turning the shear web from a substantially horizontal position to a substantially vertical position about a longitudinal axis of the shear web extending substantially through the centre of gravity of the shear web, the lifting assembly comprising:
- a plurality of lifting devices according to any one of the previous claims, wherein preferably the first and second repositioning means of each lifting device allow adjustment of the distance from each of the fixing devices to the first attachment point so that, when the lifting devices are distributed and engaged along the longitudinal axis of the shear web, the longitudinal axis of the shear web is arranged at substantially the same pre-predefined distance from the first attachment point of each lifting device; and
- preferably a lifting beam comprising a plurality of lines corresponding to the number of attachment points of the plurality of lifting devices, wherein each line is attached to a dedicated attachment point and preferably one or more winches for selectively pulling the plurality of lines to allow lifting in the horizontal position and turning the shear web to the vertical position.

In addition, the lifting assembly may further comprise a shear web. The plurality of lifting devices may be releasably engaged to the shear web at or adjacent to respective mounting flanges of the shear web.

A third aspect of the present disclosure relates to a method of turning a shear web from a substantially horizontal position to a substantially vertical position about a longitudinal axis of the shear web extending substantially through the centre of gravity of the shear web, comprising one or more of the steps of:
- preferably providing the shear web in the substantially horizontal position;
- providing a plurality of lifting devices according to the first aspect of this disclosure or a lifting assembly according to the second aspect of this disclosure;
- distributing the plurality of lifting devices at respective positions along a longitudinal axis of the shear web;
- for each lifting device, adjusting the distance from each of the fixing elements to the first attachment point using the first and second repositioning means, and releasably engaging the fixing devices so that the longitudinal axis of the shear web is arranged at substantially the same pre-defined distance from the first attachment point at each lifting device and the longitudinal axis extends substantially through the centre of gravity of the shear web; and
- preferably applying a turning torque to the shear web via the first attachment point, and preferably the second attachment point, of each lifting device so as to turn the shear web substantially about the longitudinal axis from the substantially horizontal position to the substantially vertical position.

Additionally, the shear web may be turned both clockwise and counterclockwise. For example, the step of applying the turning torque may involve either of turning the shear web clockwise or counterclockwise.

Accordingly, the method allows for both clockwise and counterclockwise turning of the shear web. This flexibility accommodates different wind turbine blade designs and operational requirements, enabling the method to be applied across a range of applications. Whether the turning direction is clockwise or counterclockwise, the method remains effective, enhancing versatility and adaptability in the manufacturing process.

Additionally or alternatively, the shear web may be provided on one or more supports. Moreover, preferably prior to applying the turning torque, the method may comprise a step of applying a lifting force to the first and second attachment points of each lifting device so as to lift the shear web up from the one or more supports.

Additionally or alternatively, the turning torque may be applied by attaching a line, preferably of the lifting beam of the lifting assembly, to the first attachment point of each of the plurality of lifting devices. For example, an end of the elongated body opposite of the first attachment point may rest or be hinged on a surface. Thus, when the lines pull the first attachment point of each lifting device, a turning torque is applied about said end. Alternatively, a line, preferably of the lifting beam of the lifting assembly, may also be attached to the second attachment point of each of the plurality of lifting devices. This may enable the lifting force to be applied by the lines attached to the first and second attachment points.

Additionally, the turning torque may preferably be applied by pulling the lines attached to the first attachment points more or less than the lines attached to the second attachment points of the lifting devices. For example, the lines attached to first attachment points may be pulled while the lines attached to the second attachment points remain taut. Thus, the first attachment points will be raised above the second attachment points and the lifting devices will begin to turn. Likewise, the lifting devices would turn in the opposite direction if the lines attached to the second attachment points are pulled while the lines attached to the first attachment points remain taut.

By employing such a line attachment system, not only does it enable controlled turning of the shear web, but it also allows for additional movements beyond turning. The lines attached to each attachment point of the lifting devices may offer the flexibility to lift the shear web from its supports, turn it, and even move it to another location. This may eliminate the need for separate lifting and turning equipment, as the line attachment system can fulfil multiple functions in a single operation. The versatility of the method may enable efficient handling of the shear web throughout the manufacturing process. By integrating lifting, turning, and movement capabilities into a single line attachment system, significant time and cost savings can be achieved. The elimination of additional equipment may streamline the workflow and may reduce the complexity of the manufacturing process.

Additionally or alternatively, the step of distributing the plurality of lifting devices may comprise arranging the elongated body above or below the shear web, and may comprise arranging the fixing devices on the elongated body, for example sliding the sliding elements of the fixing devices onto the elongated body.

A fourth aspect of the present disclosure relates to a method of manufacturing a wind turbine blade, comprising the steps of:
- preferably moulding a shear web in a shear web mould;
- preferably demoulding the shear web from the shear web mould preferably by arranging the shear web on one or more supports so as to place the shear web above the shear web mould in a substantially horizontal position;
- performing a method according to the third aspect of this disclosure;
- preferably attaching an assembly fixture to the shear web in the substantially vertical position;
- preferably releasing the plurality of lifting devices from the shear web so as to transfer support of the shear web from the plurality of lifting devices to the assembly fixture; and
- preferably lowering the assembly fixture with the shear web so that a mounting flange of the shear web is placed on a structural member, such as a spar cap, in a wind turbine blade mould which is separate from the shear web mould, wherein an adhesive arranged prior on the mounting flange adheres the shear web to the structural member.

A person skilled in the art will appreciate that any one or more of the above aspects of this disclosure and embodiments thereof may be combined with any one or more of the other aspects of this disclosure and embodiments thereof.

### BRIEF DESCRIPTION OF THE DRAWINGS

Embodiments of this disclosure will be described in more detail in the following with regard to the accompanying figures. The figures show one way of implementing the present invention and are not to be construed as being limiting to other possible embodiments falling within the scope of the attached claim set.
Figure 1 is a schematic perspective view of a wind turbine.
Figure 2 is a schematic perspective view of a wind turbine blade for a wind turbine as shown in Figure 1.
Figure 3 is a schematic perspective view of two shear webs resting in a horizontal position before turning.
Figure 4 is a schematic top view of a single shear web having a plurality of lifting devices according to this disclosure distributed along its longitudinal axis.
Figure 5 is a cross-sectional view at the line A-A of Figure 4 showing a lifting device releasably engaged at mounting flanges of a shear web resting on supports above a shear web mould.
Figs. 6A-B are a schematic perspective and a side view, respectively, of a clamp for a lifting device as for example shown in Figure 5.
Figure 7 is a schematic side view of a shear web in its vertical position mounted to an assembly fixture after turning via the lifting devices of the present disclosure.
Figure 8 is a schematic side view of two shear webs in their vertical position being lowered via the assembly fixture onto structural members of wind turbine blade part in a wind turbine blade mould.

### DETAILED DESCRIPTION

In the following figure description, the same reference numbers refer to the same elements and may thus not be described in relation to all figures. A reference number with a prime suffix denotes an element similar to an element referred to without the prime suffix.

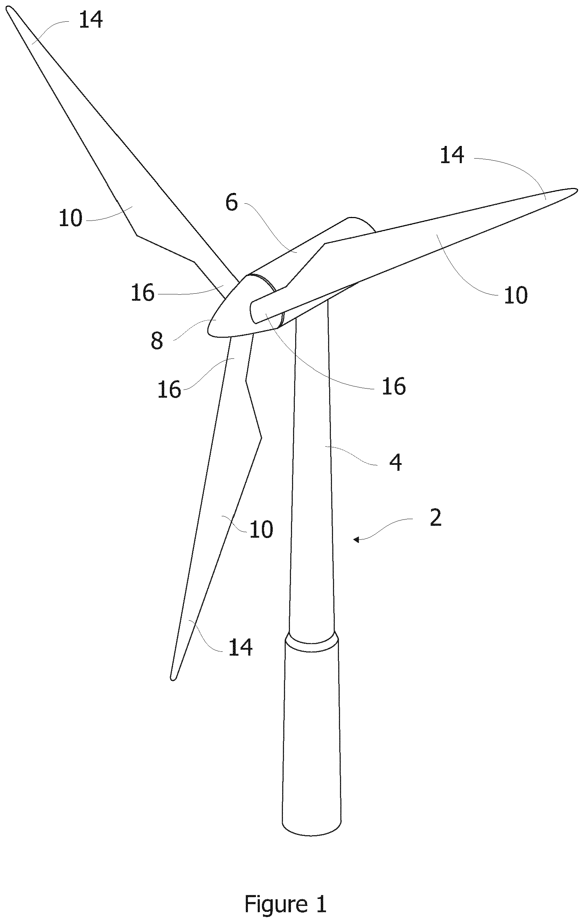

Figure 1 illustrates a conventional modern upwind wind turbine 2 according to the so-called "Danish concept" with a tower 4, a nacelle 6 and a rotor with a substantially horizontal rotor shaft which may include a tilt angle of a few degrees. The rotor includes a hub 8 and three blades 10 extending radially from the hub 8, each having a blade root 16 nearest the hub and a blade tip 14 furthest from the hub 8.

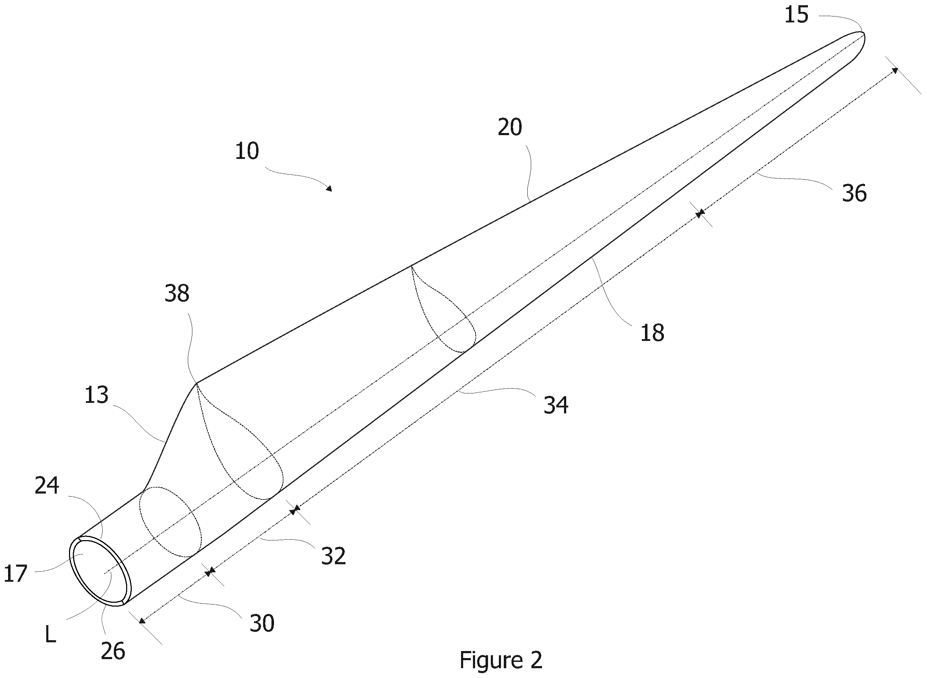

Figure 2 shows a schematic view of an exemplary wind turbine blade 10. The wind turbine blade 10 has the shape of a conventional wind turbine blade extending along a spanwise axis L between a root end 17 and a tip end 15 and comprises a root region 30 closest to the hub, a profiled or an airfoil region 34, a tip region 36 furthest away from the hub, and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root region 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub. A shoulder 38 of the blade 10 is defined as the position where the blade 10 has its largest chord length. The shoulder 38 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

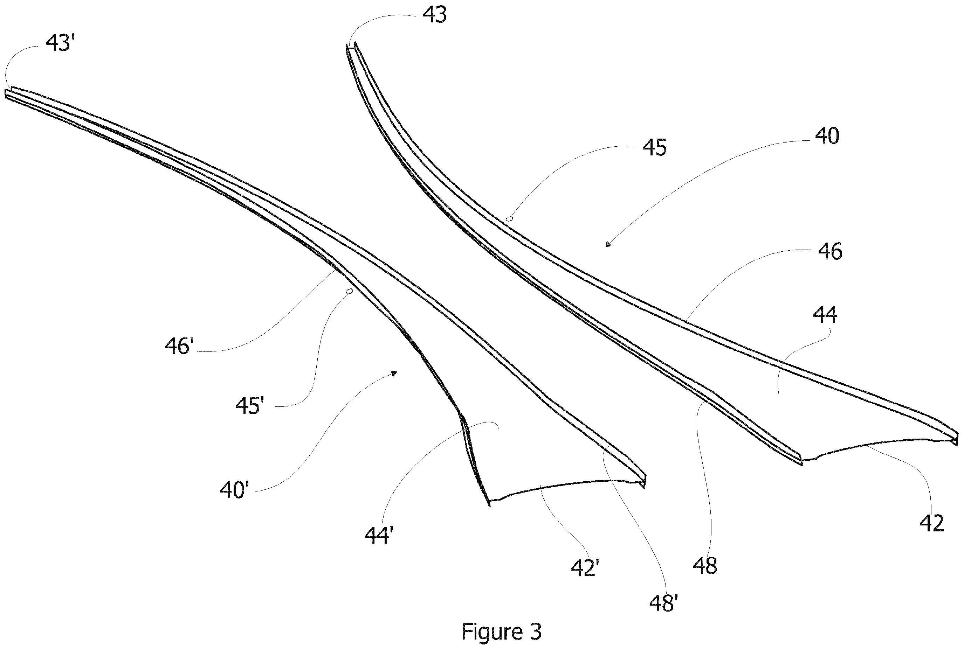

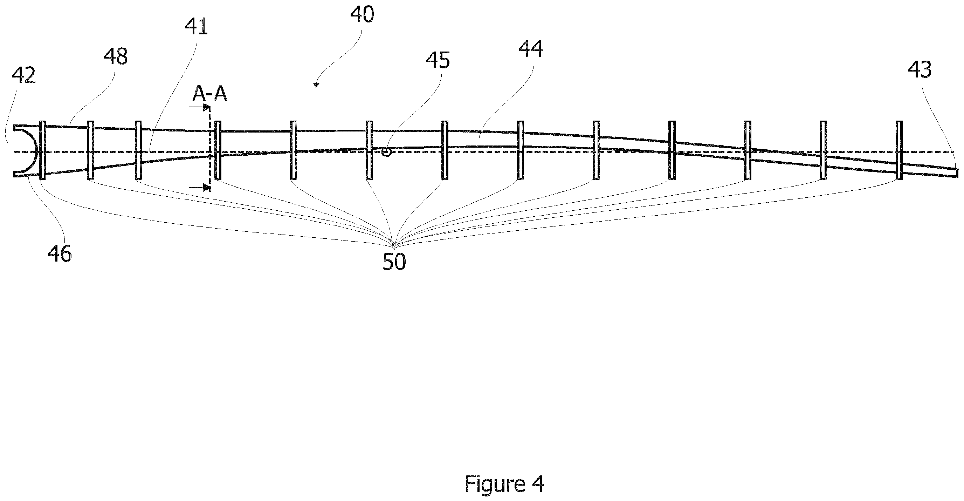

The structural components of a wind turbine blade include spar caps (also known as a main laminate) that may be placed or integrated into shell halves 24, 26 (see Figure 2). The spar caps are held apart and stiffened by the inclusion of one or more shear webs. The shear webs are moulded in a separate shear web mould often via a vacuum assisted resin transfer moulding (VARTM) process. Since a shear web is a long flat piece with flanges, it is often most economical to mould it in a horizontal position. Turning to Figure 3, two shear webs 40, 40' are shown in the horizontal position prior to being turned to their vertical position. Although not shown in this figure, the shear webs 40, 40' have finished curing and may be resting on supports above their respective shear web mould. The shear webs 40, 40' each comprises a first mounting flange 46, 46', an opposing second mounting flange 48, 48', and a web body 44, 44' extending between the mounting flanges. As can be seen from the Figure 4, the shear webs extend along a curved course from a root end 42, 42' to a tip end 43, 43'. A location of the centre of gravity 45, 45' of the shear webs 40, 40', respectively, is schematically shown to lie outside the shear webs 40, 40' adjacent to the first mounting flange 46, 46' thereof. Figure 4 provides a top view which better illustrates the curved course of a single shear web but the same applies to the other shear web. The shear web 40 extends along a longitudinal axis 41, which extends from the root end 42 to the tip end 43 through the centre of gravity 45. The longitudinal axis 41 corresponds to the axis about which turning the shear web minimises the mass moment of inertia. Accordingly, the shear web 40 must be turned from the current horizontal position to a vertical position which is required for the shear webs' inclusion in the finished wind turbine blade. To do this, a plurality of lifting devices 50 are distributed at distinct locations along the length of the shear web 40. The number of lifting devices 50 and distance between adjacent lifting devices are determined to safely support and turn the shear web 40. For example, the distance between shear webs may be an average of about 5 metres corresponding to about 18 lifting devices for a 90-metre shear web. It may be determined that a shorter distance between shear webs may be necessary at the heavier sections nearer the root end 42 than near the tip end 43.

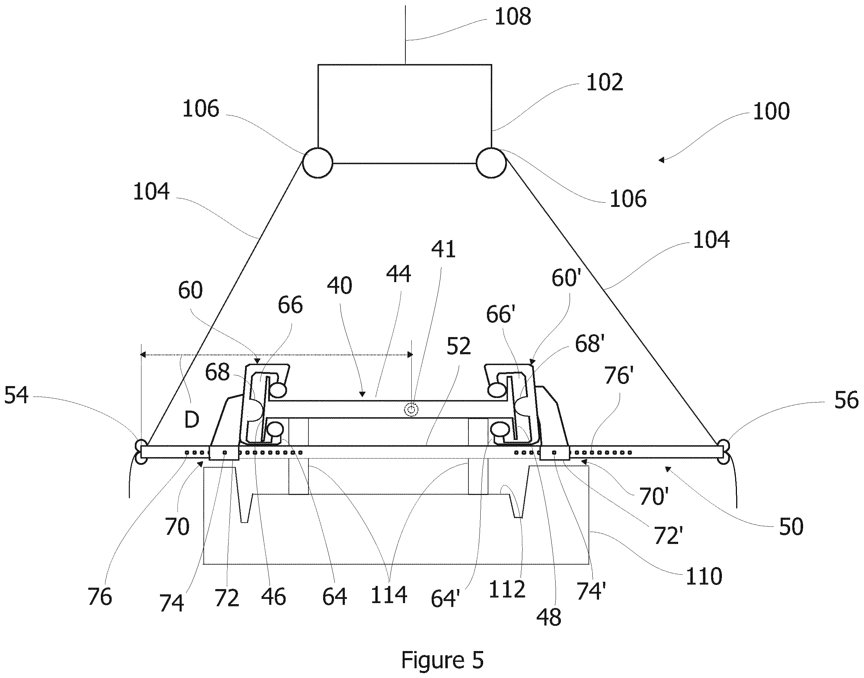

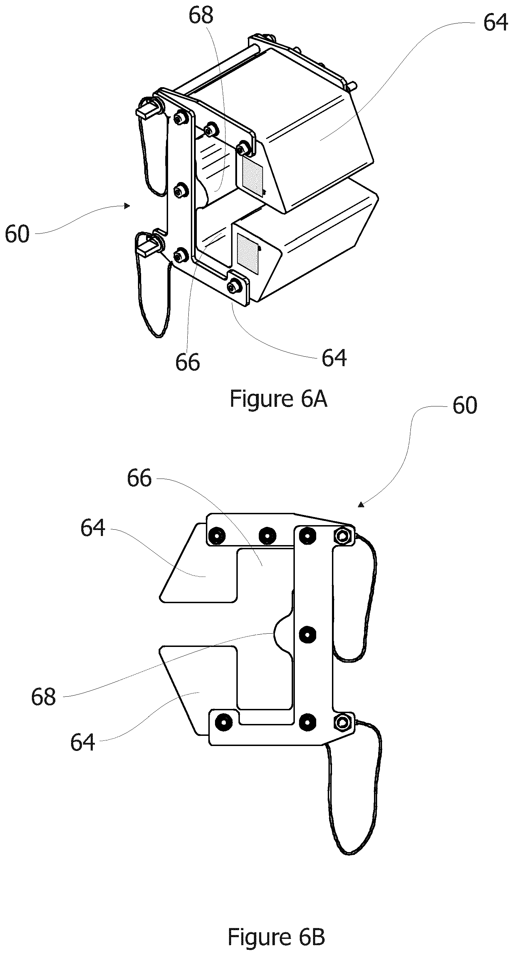

Turning to Figure 5 which is cross-sectional view, taken at line A-A of Figure 4, the shear web 50 rests on supports 114 above a mould surface 112 of a shear web mould 110. The lifting devices 50 are placed as follows. The lifting devices 50 each comprises an elongated body 52, which in the shown example has the form of a bar with a rectangular cross-section but can be any suitable shape. The elongated body 52 is placed between the shear web 50 and the shear web mould 110 but may also be placed above the shear web. The lifting devices 50 each comprises a first fixing device 60 and a second fixing device 60' which are shaped to engage the varying geometry of the mounting flanges 46, 48 along the length of the shear web 40. The fixing devices are shown in greater details on Figure 6A-B. Turning back to Figure 5, the fixing devices 60, 60' comprise repositioning means 70, 70', respectively, each including a sliding element 72, 72' which is a hollow element adapted to slide along the elongated body 52. The fixing devices 60, 60' are then slid onto the elongated body 52 via the respective sliding element 72, 72'. The repositioning means 70, 70' further comprises first and second sets of holes 76, 76' distributed along the length of the elongated body 52. In principle, holes may be provided along the entire length of the elongated body 52 to increase flexibility or only along those sections deemed necessary to specific implementation to save costs. The elongated body 52 extends from a first attachment point 54 to a second attachment point 56 for affixing lines 104 thereto. With the elongated body 52 placed at a distinct location along the length of the shear web, it is identified which holes 76, 76' that allow the fixing devices 60, 60' to engage the mounting flanges 46, 46' of the shear web 40 so that the longitudinal axis 41 of the shear web is placed at a pre-defined distance D from the first attachment point 54. Once identified, the sliding elements 72, 72' are slid to the identified holes, and the locking elements 74, 74', which in the current example are in the form of pins, are inserted to lock the fixing devices 60, 60' in place. The remaining lifting devices 50 are also adjusted, via the repositioning means 70, 70', to arrange the longitudinal axis 41 at substantially the same pre-defined distance D to the first attachment point 54 within a sufficient tolerance interval. Due to this and since the shear web 40 curves from the root end 42 to the tip end 43, the location of the fixing devices 60, 60' on the elongated body has to be adapted according to the specific location of the lifting device. For example, as shown in Figure 4, the separation distance between the fixing devices 60, 60' of a lifting device 50 is greatest close to the root and gradually decreases towards the tip end 43. Furthermore, due to the curved course of the shear web 40, the mounting flanges 46, 48 shift from both being on one side of the longitudinal axis 41, see for example the fifth to the ninth lifting device (counting from the root end 42 on Figure 4), to being on the opposite side of the longitudinal axis 41, see the two lifting devices closest to the tip end 43 on Figure 4. Accordingly, the holes 76, 76' are provided to accommodate that the fixing devices 60, 60' can engage the mounting flanges 46, 48 at all locations along the length of the shear web 40. Turning to Figures 6A-B, an embodiment of a fixing device 60 are shown in greater detail. The fixing device comprises two jaws 64 adapted to reach around a mounting flange of a shear web and engage the web body (as best seen in Figure 5). The jaws 64 are hinged to allow an operator to open and close the jaws 64. Once closed, the jaws 64 define a space 66 which can accommodate the mounting flange therein (see Figure 5). The fixing device 60 further comprises a pultrusion 68 extending into the space 66 and is adapted to engage an exteriorly facing side of a mounting flange accommodated in the space 66. Once all lifting devices are placed, the longitudinal axis 41 of the shear web 40 extends substantially in parallel to an axis (not shown) extending through the first attachment points 54 of all engaged lifting devices 50 as best seen in Figure 4. Returning to Figure 5, a lifting beam 102 of a lifting assembly 100 is then arranged above the lifting devices 50 and the shear web 40. Dedicated lines 104 extends from winches 106 of the lifting beam 102 and to the attachment points 54, 56 of each lifting device. In the shown example, a dedicated winch 106 and line 104 are attached to a single attachment point resulting in two winches 106 and two lines 104 for each lifting device 50 for increased control. However, other embodiments involve a single winch 106 for each lifting device 50. In any case, a crane device (not shown) lifts the lifting assembly 100 using a crane line 108, and the winches 106 pull the lines 104 to lift the lifting devices 50 with the shear web off from the supports 114 on the shear web mould 110. The lifting assembly 100 could also be used to lift a shear web 50 from a storage location. Once sufficient clearance has been obtained, the turning operation can begin. The winches 106 pull the lines 104 attached to either the first attachment points 54 or the second attachment points 56 depending on whether a clockwise or counterclockwise turning operation is desired. The lines 104 attached to other attachment points are either maintained, pulled less, or preferably loosened. A loosening of the other lines ensures that while the shear web 40 turns, the longitudinal axis 41 remains substantially stationary.

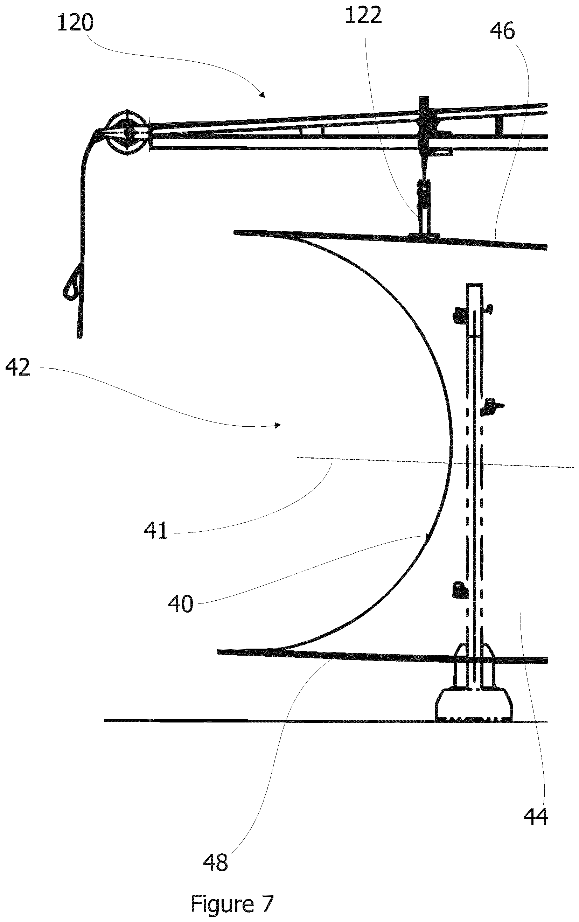

Once the shear web 40 has been turned to its vertical position, the shear web is transferred to an assembly fixture 120 having a plurality of holding devices 122 engaging and holding the shear web 40 at the first mounting flange 46. The fixing devices 60, 60' of each lifting device 50 are then released from the respective mounting flange 46, 48 and removed to arrive at an arrangement as shown in Figure 7.

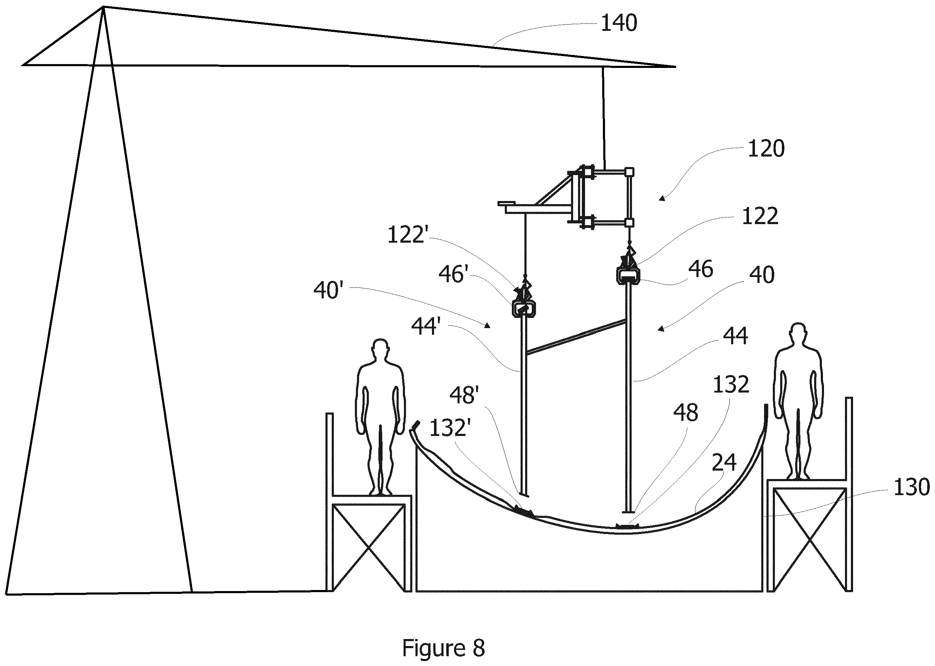

As shown in Figure 8, the assembly fixture 120 holds the shear web 40 as well as another shear web 40', which is provided in the same way and is held by another holding device 122' of the assembly fixture 120. The assembly fixture 120 is then lifted by a crane device 140 above a wind turbine blade mould 130. The shear webs 40, 40' are then lowered until the adhesive previously provided on each second mounting flanges 48, 48' contacts the respective structural members 132, 132'. The structural members 132, 132' are in this case spar caps integrated into a cured first shell half 24. In an operation which is not shown here but is well known to the skilled person, a second cured shell half is then turned onto the first shell half 24 so that adhesive previously provided on each of the first mounting flanges 46, 46' contacts the respective structural members of the second shell half. Once the separation line between the shell halves is then adhered and finished to form a complete shell 13 and further final processing steps are completed, the wind turbine blade 10 is completed as best seen in Figure 2.

### LIST OF REFERENCES

- 2: wind turbine
- 4: tower
- 6: nacelle
- 8: hub
- 10: blade
- 13: shell
- 14: blade tip
- 15: tip end
- 16: blade root
- 17: root end
- 18: leading edge
- 20: trailing edge
- 24: first shell half
- 26: second shell half
- 30: root region
- 32: transition region
- 34: airfoil region
- 36: tip region
- 38: shoulder
- 40: shear web
- 41: longitudinal axis
- 42: root end
- 43: tip end
- 44: web body
- 45: centre of gravity
- 46: first mounting flange
- 48: second mounting flange
- 40': second shear web
- 42': root end
- 43': tip end
- 44': web body
- 45': centre of gravity
- 46': first mounting flange
- 48': second mounting flange
- 50: lifting device
- 52: elongated body
- 54: first attachment point
- 56: second attachment point
- 60: first fixing device
- 64: jaws
- 66: space
- 68: pultrusion
- 60': second fixing device
- 64': jaws
- 66': space
- 68': pultrusion
- 70: first repositioning means
- 72: first sliding element
- 74: first locking element
- 76: first set of one or more holes
- 70': second repositioning means
- 72': second sliding element
- 74': second locking element
- 76': second set of one or more holes
- D: pre-defined distance
- 100: lifting assembly
- 102: lifting beam
- 104: line
- 106: winch
- 108: crane line
- 110: shear web mould
- 112: mould surface
- 114: supports
- 120: assembly fixture
- 122: holding device
- 130: wind turbine blade mould
- 132: structural member
- 132': structural member
- 140: crane device
- L: spanwise axis

## Claims

1. A lifting device for releasably engaging a shear web for a wind turbine blade to allow turning the shear web from a substantially horizontal position to a substantially vertical position substantially about a longitudinal axis of the shear web extending substantially through the centre of gravity of the shear web, the shear web having a first mounting flange, an opposing second mounting flange, and a web body arranged between the first mounting flange and the second mounting flange, wherein the lifting device comprises:
- a first attachment point for securing a line thereto;
- preferably a second attachment point for securing a line thereto;
- an elongated body extending from the first attachment point;
- a first fixing device secured to the elongated body configured to releasably engage the shear web at or adjacent to the first mounting flange; and
- a second fixing device configured to releasably engage the shear web at or adjacent to the second mounting flange;
wherein the first and second fixing devices are secured to the elongated body and the lifting device comprises a first repositioning means for allowing adjustment of a distance between the first fixing device and the first attachment point along the elongated body, and comprises a second repositioning means for allowing adjustment of a distance between the second fixing device and the first attachment point along the elongated body so that the longitudinal axis of the shear web, when held by the lifting device, can be arranged a pre-defined distance from the first attachment point along the elongated body.

2. A lifting device according to claim 1, wherein the first fixing device comprises a first clamp preferably being configured for releasably engaging the shear web at the first mounting flange and/or wherein the second fixing device comprises a second clamp preferably being configured for releasably engaging the shear web at the second mounting flange.

3. A lifting device according to claim 2, wherein the first clamp and/or the second clamp comprises jaws configured to releasably engage the web body adjacent to the respective mounting flange, wherein the jaws are configured to define a space for accommodating the respective mounting flange when the shear web is held by the lifting device.

4. A lifting device according to claim 3, wherein the first and/or second clamp comprises a pultrusion arranged to extend into the space and configured for engaging the respective mounting flange when the shear web is held by the lifting device.

5. A lifting device according to according to any one of the previous claims, wherein the elongated body is a beam.

6. A lifting device according to any one of the previous claims, wherein the first and second repositioning means comprise a first and a second sliding element, respectively, configured for sliding along the elongated body towards and away from the first and second attachment points, respectively.

7. A lifting device according to any one of the previous claims, wherein the first and second repositioning means comprise first and second locking elements, such as a lock pin or a bolt, respectively, configured for selectively locking the position of the first and second sliding elements, respectively.

8. A lifting device according to claim 7, wherein the first and second repositioning means respectively comprise a first set of one or more holes and preferably a second set of one or more holes distributed along the length of the elongated body, wherein the first and second locking elements are configured for selectively attaching the first and second fixing devices along the elongated body using the first and second set of one or more holes, respectively.

9. A lifting assembly for releasably engaging a shear web for a wind turbine blade to allow turning the shear web from a substantially horizontal position to a substantially vertical position about a longitudinal axis of the shear web extending substantially through the centre of gravity of the shear web, the lifting assembly comprising:
- a plurality of lifting devices according to any one of the previous claims, wherein the first and second repositioning means of each lifting device allow adjustment of the distance from each of the fixing devices to the first attachment point so that, when the plurality of lifting devices are distributed and engaged along a longitudinal axis of the shear web, the longitudinal axis of the shear web is arranged at substantially the same pre-defined distance from the first attachment point of each lifting device; and
- a lifting beam comprising a plurality of lines corresponding to the number of attachment points of the plurality of lifting devices, wherein each line is attached to a dedicated attachment point and preferably one or more winches for selectively pulling the plurality of lines to allow lifting in the horizontal position and turning the shear web to the vertical position.

10. A method of turning a shear web from a substantially horizontal position to a substantially vertical position about a longitudinal axis of the shear web extending substantially through the centre of gravity of the shear web, comprising the steps of:
- providing the shear web in the substantially horizontal position;
- providing a plurality of lifting devices according to any one of claims 1-8 or a lifting assembly according to claim 9;
- distributing the plurality of lifting devices at respective positions along a longitudinal axis of the shear web;
- for each lifting device, adjusting the distance from each of the fixing elements to the first attachment point using the first and second repositioning means, and releasably engaging the fixing devices so that the longitudinal axis of the shear web is arranged at substantially the same pre-defined distance from the first attachment point at each lifting device; and
- applying a turning torque to the shear web via the first attachment point of each lifting device so as to turn the shear web substantially about the longitudinal axis from the substantially horizontal position to the substantially vertical position.

11. A method according to claim 10, wherein the shear web can be turned both clockwise and counterclockwise.

12. A method according to any one of claims 10-11, wherein the shear web is provided on one or more supports, and wherein, prior to applying the turning torque, the method comprises a step of applying a lifting force to the first and second attachment points of each lifting device so as to lift the shear web up from the one or more supports.

13. A method according to any one of claims 10-12, wherein the turning torque is applied by attaching a line, preferably of the lifting beam of the lifting assembly, to the first attachment point of each of the plurality of lifting devices.

14. A method according to any one of claims 10-13, wherein the step of distributing the plurality of lifting devices comprises arranging the elongated body above or below the shear web, and arranging the fixing devices on the elongated body, for example sliding the sliding elements of the fixing devices onto the elongated body.

15. A method of manufacturing a wind turbine blade, comprising the steps of:
- moulding a shear web in a shear web mould;
- demoulding the shear web from the shear web mould preferably by arranging the shear web on one or more supports so as to place the shear web above the shear web mould in a substantially horizontal position;
- performing a method according to any one of claims 10-14;
- attaching an assembly fixture to the shear web in the substantially vertical position;
- releasing the plurality of lifting devices from the shear web so as to transfer support of the shear web from the plurality of lifting devices to the assembly fixture; and
- lowering the assembly fixture with the shear web so that a mounting flange of the shear web is placed on a structural member, such as a spar cap, in a wind turbine blade mould which is separate from the shear web mould.
